# EUROPEAN PATENT APPLICATION

(11) **EP 2 343 228 A1**
(43) Date of publication of application: **13.07.2011**
(21) Application number: 11160024.3
(22) Date of filing: 27.05.2008
(51) Int. Cl.: B62B 3/16, B65D 25/20, B65D 21/04

(54) **Container and dolly**

(30) Priority: 29.05.2007 US 754458
(62) Divisional of application: 08251842.4
(71) Applicant: Rehrig Pacific Company, Los Angeles, CA 90023 (US)
(72) Inventor: Meers, Ryan C., Los Angeles, CA 90025 (US)
(74) Representative: Leckey, David Herbert

(57) **Abstract**

A dolly (80) comprises a deck (22) having a plurality of recesses (86) formed in an upper surface thereof. The recesses (86) each include two curved portions (90) partially separated by a rib. A plurality of casters (88, 89) extend downwardly from the deck (82). Each is aligned with a respective one of the recesses (86).

## Description

### BACKGROUND OF THE INVENTION

The present invention relates generally to a dolly.

There are known containers that are nestable when oriented alike and stackable when oriented 180 degrees relative to one another. Opposing walls of the containers are complementary, such that walls of a lower container will support a similar container stacked thereon in the 180 degree orientation.

One such container includes a holder for a card on the exterior of one end wall. The holder includes a small, flexible, clear plastic flap secured to the wall by rivets only at the lower end. The flap can be bent downward to insert (or remove) a card that identifies the contents of the container. Automated handling equipment bends the card holder flap to remove and replace the cards. Over time, the flap eventually breaks after repeated flexing.

Some containers include a complementary dolly for transporting a stack of loaded containers or empty containers. The dolly has two fixed casters and two casters that pivot about a vertical axis. The upper surface of the dolly includes recesses for receiving the casters of a similar dolly, such that they can be stacked when not in use. However, because two of the casters are rotatable, the user often has to rotate the rotatable casters to align them with the recesses on the dolly below.

### SUMMARY OF THE INVENTION

The present invention provides a container having an improved card holder that is more durable and can withstand repeated use without fatigue. The card holder in one embodiment includes a flap for holding the card. The flap is connected to the container by a hinge. The hinge includes a hinge pin and a hinge receiver that permit the card holder to pivot, rather than bend. Flexible arms bias the sheet toward the closed position to retain the card.

A complementary dolly is also provided with recesses on its upper surface for automatically rotating the rotatable casters of a similar dolly stacked thereon to ensure proper alignment.

Although the card holder and the dolly are both disclosed in the context of a 180 degree stack/nest container, both the card holder and the dolly could be used with other types of containers and both could be used with or without one another.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a perspective view of a container according to a first embodiment of the present invention, with the card holder in the closed position.
Figure 2 is an enlarged view the container of Figure 1, with the card holder in the open position.
Figure 3 is a perspective interior view of the card holder of Figure 1.
Figure 4 is a perspective exterior view of the card holder of Figure 1.
Figure 5 is a side view of the card holder of Figure 1.
Figure 6 is a perspective exterior view of the container of Figure 1 without the card holder.
Figure 7 is a perspective interior view of the container of Figure 6.
Figure 8 is a perspective exterior view of the container of Figure 1, with the card holder in the closed position.
Figure 9 is a section view through the end wall of the container of Figure 1, with the card holder in the closed position.
Figure 10 is a section view through the end wall of the container of Figure 1, with the card holder in the closed position.
Figure 11 is a section view through the end wall of the container of Figure 1, with the card holder in the open position.
Figure 12 is an upper perspective view of a container according to a second embodiment of the present invention.
Figure 13 is a lower perspective view of the container of Figure 12.
Figure 14 is a lower perspective view of the container of Figure 12, without the card holder.
Figure 15 is an enlarged bottom view of the end wall of the container of Figure 14.
Figure 16 is a perspective interior view the container of Figure 14.
Figure 17 is a perspective view of the interior surface of the card holder of Figure 12.
Figure 18 is a bottom view of the card holder of Figure 17.
Figure 19 is a side view of the card holder of Figure 17.
Figure 20 is an enlarged bottom view of the end wall of the container of Figure 12.
Figure 21 is a section view through the center of the end wall of Figure 20.
Figure 22 is an alternate section view through the end wall of Figure 20.
Figure 23 is a perspective view of a dolly that can be used to carry a plurality of the containers of Figures 1-11 and/or Figures 12-22.
Figure 24 is a top perspective view of the dolly of Figure 23
Figure 25 illustrates the alignment of casters from a dolly stacked on the dolly of Figure 23.
Figure 26 is a bottom perspective view of the dolly of Figure 23.

### DETAILED DESCRIPTION OF THE PREFERRED EMBODIMENT

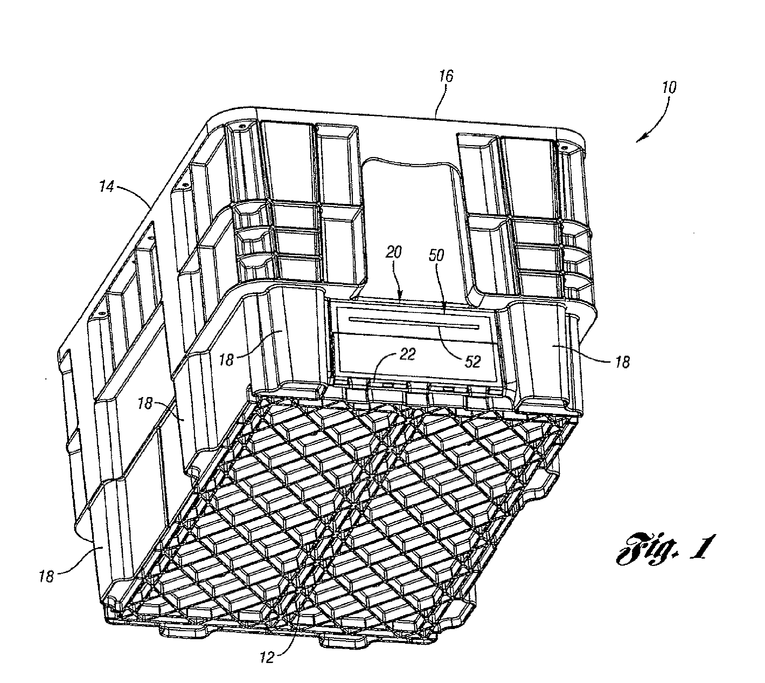

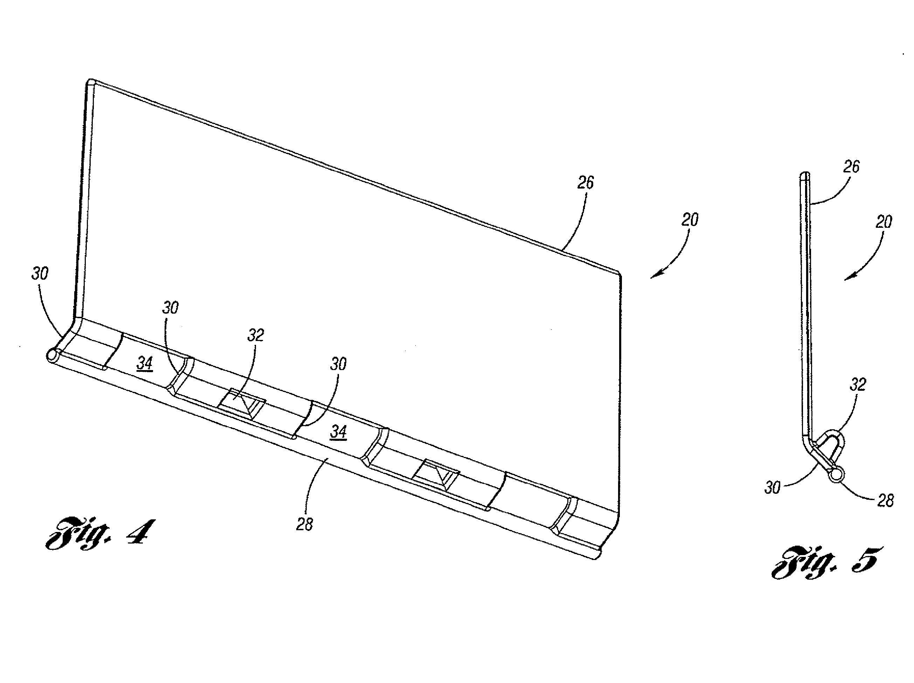

Figures 1-11 illustrate a container 10 according to a first embodiment of the present invention. The container 10 includes a base 12, a pair of opposed side walls including side wall 14, and a pair of opposed end walls including end wall 16. In order to provide the 180 degree stacking and nesting functionality, the side walls and end walls include alternating inward and outward offset portions 18. The offset portions 18 on the opposed side walls and opposed end walls are arranged such that a like container will nest in the container 10 if rotationally aligned and will stack on the container if rotated 180 degrees relative to the container 10.

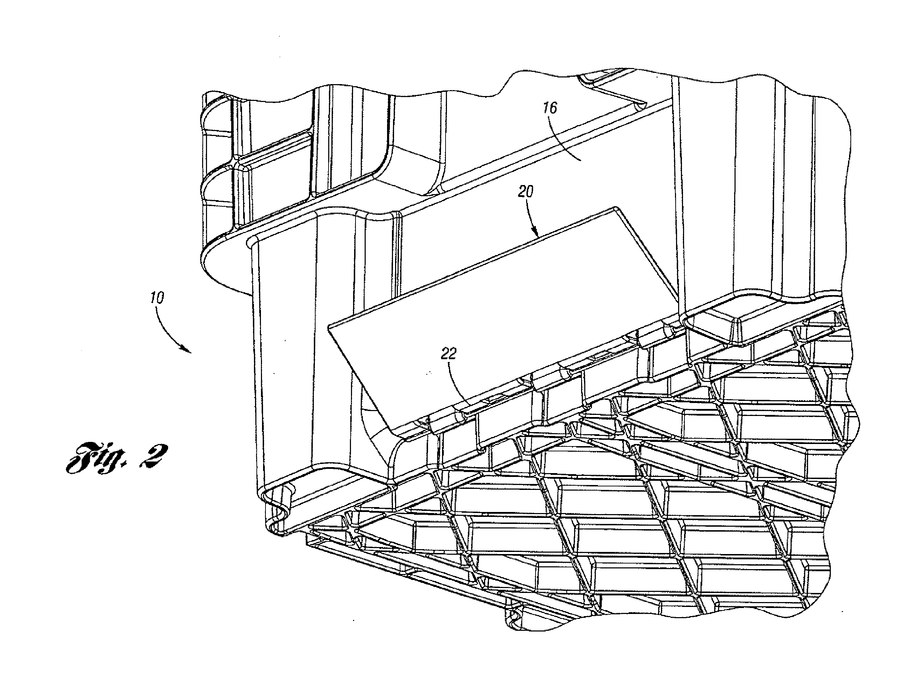

The container 10 includes a card holder 20 connected by a hinge 22 at its lower end to the end wall 16. In Figure 1, the card holder 20 is shown in the closed position with a card 50 retained between the card holder 20 and the end wall 16. The card 50 includes indicia 52 of the contents of the container 10. The indicia 52 may be text and/or computer readable indicia, such as a barcode. The card holder 20 is clear plastic so that the indicia 52 is readable through the card holder 20. As shown in Figure 2, the card holder 20 can be pivoted about the hinge 22 to an open position so that a card can be inserted or removed from behind the card holder 20.

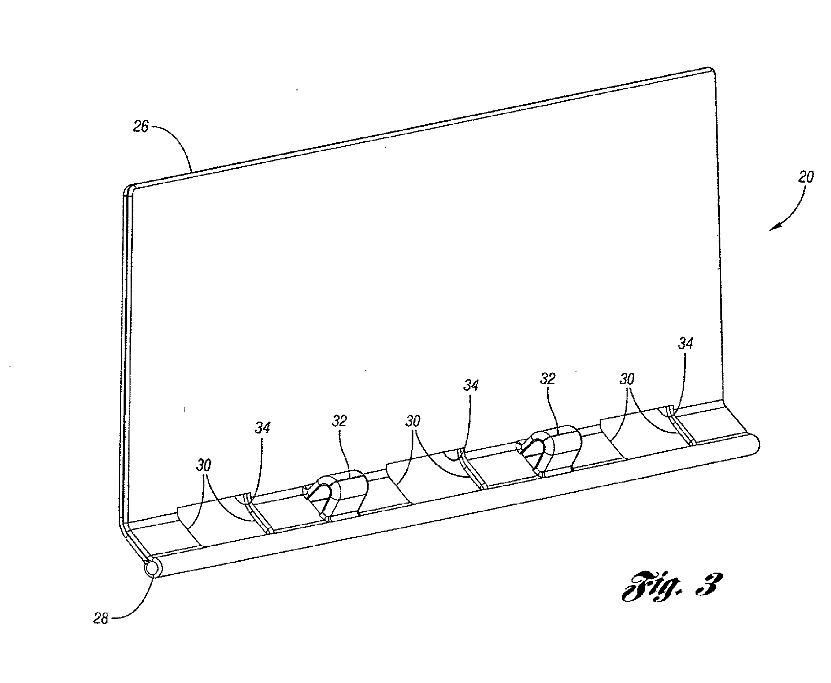

The card holder 20 is shown in Figures 3-5. The card holder 20 includes a flap 26 connected to a hinge pin 28 by a plurality of tabs 30. The tabs 30 extend at an obtuse angle from the flap portion 26 and are spaced apart by openings 34 and arches 32.

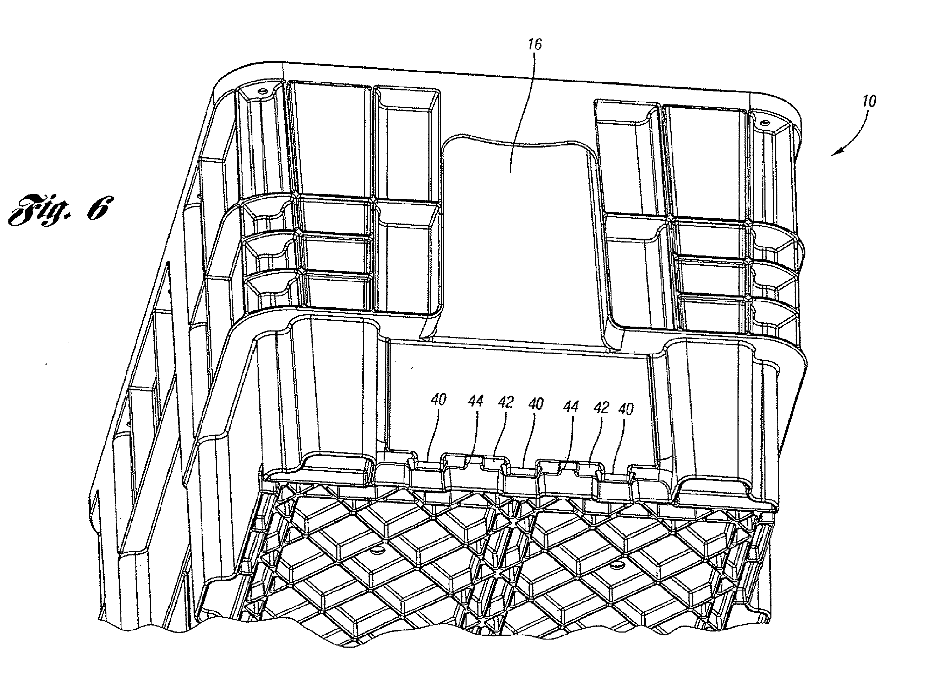

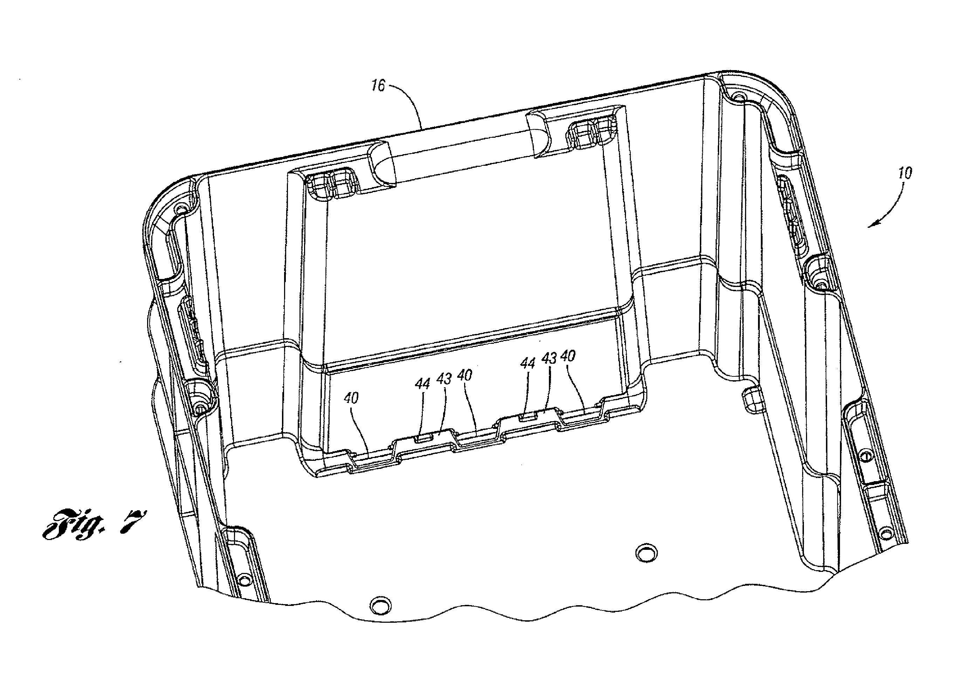

Figures 6 and 7 show the container 10 without the card holder 20. Cantilevered arms 40 form hinge receivers between recesses 42. Each of the recesses 42 is defined by a corresponding arch 32 protruding into the interior of the container 10. Each of the arches 32 includes a center opening 44.

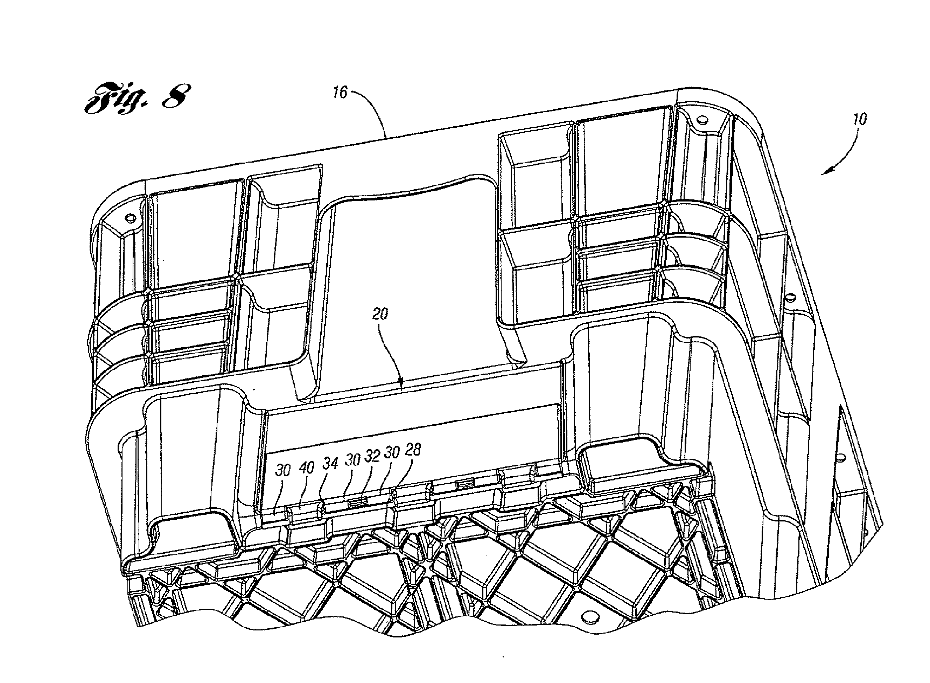

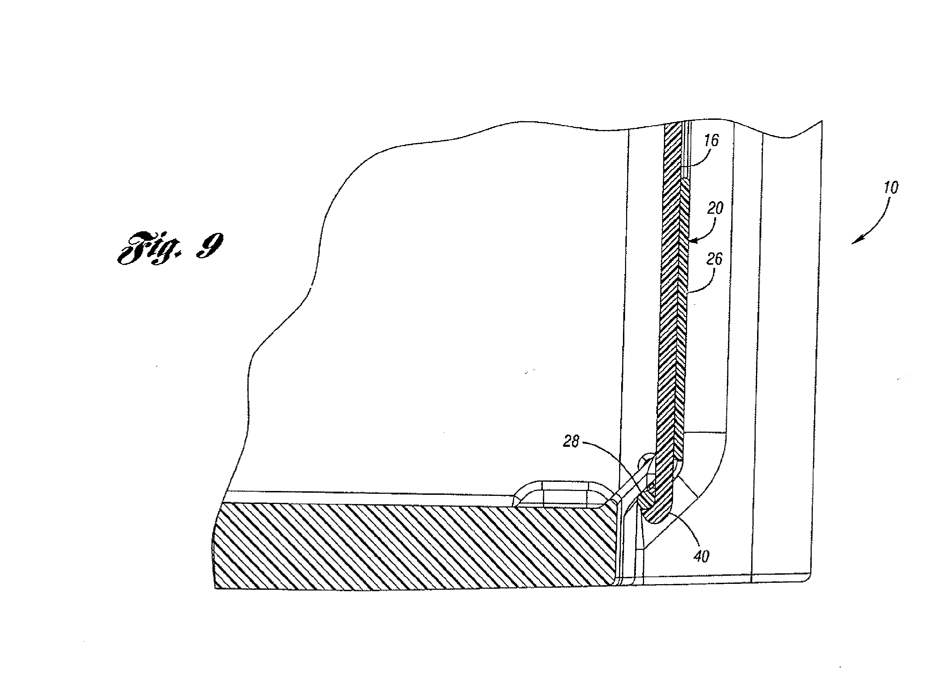

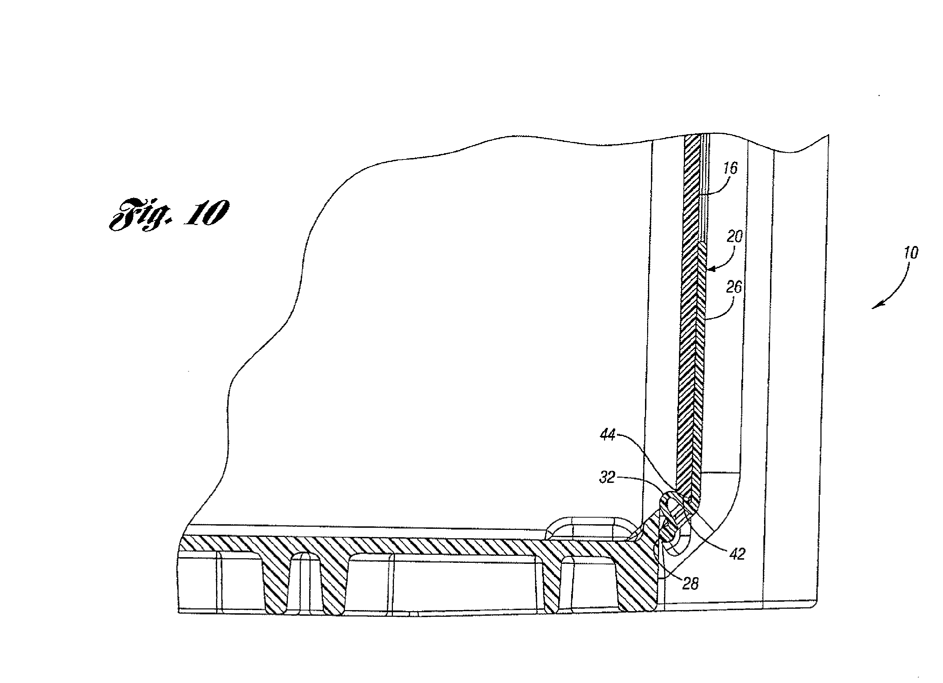

As shown in Figure 8, the card holder 20 is attached to the container 10 by snapping the hinge pin 28 under the hinge receivers formed by the arms 40 on the container 10 (Figure 9). The arches 32 of the card holder 20 are received in the openings 44 of the recesses 42 on the container 10 (Figure 10).

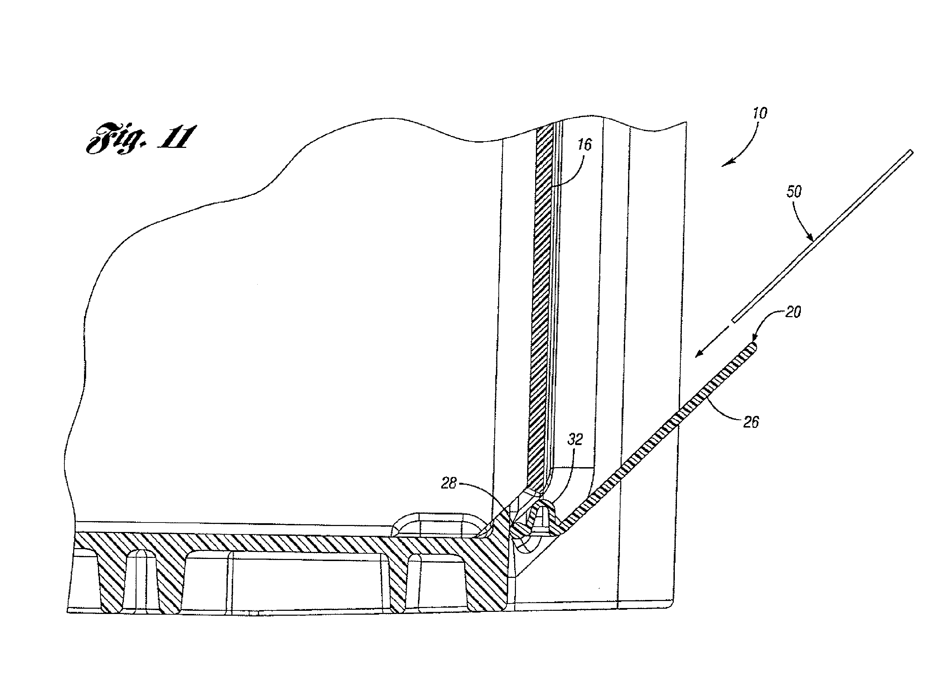

As shown in Figure 11, in use the card holder 20 is pulled to the open position (shown) so that a card 50 with information printed or stored thereon can be inserted behind the flap 26. When the card holder 20 is pivoted outward, the arches 32 of the card holder 20 are compressed, such that the arches 32 bias the flap 26 back toward the closed position when the flap 26 is released. The card 50 can then be read through the flap 26. Note that the flap 26 itself need not be flexible.

The card holder 20 is more durable than the previous card holder, even after being opened and closed many times. Additionally, if the card holder 20 does break, it is easily replaced, unlike the previous card holder.

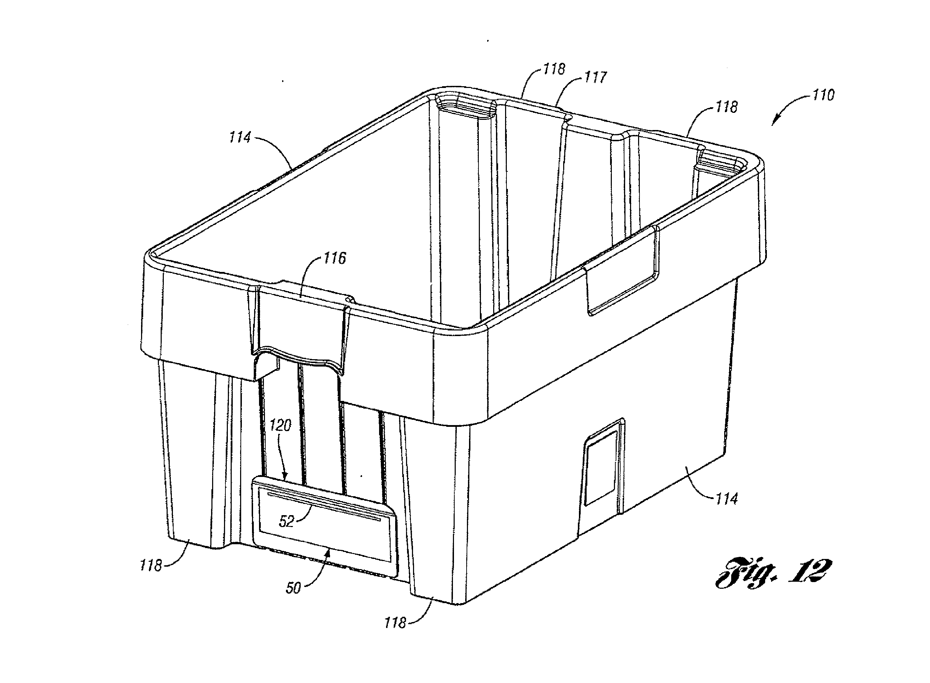

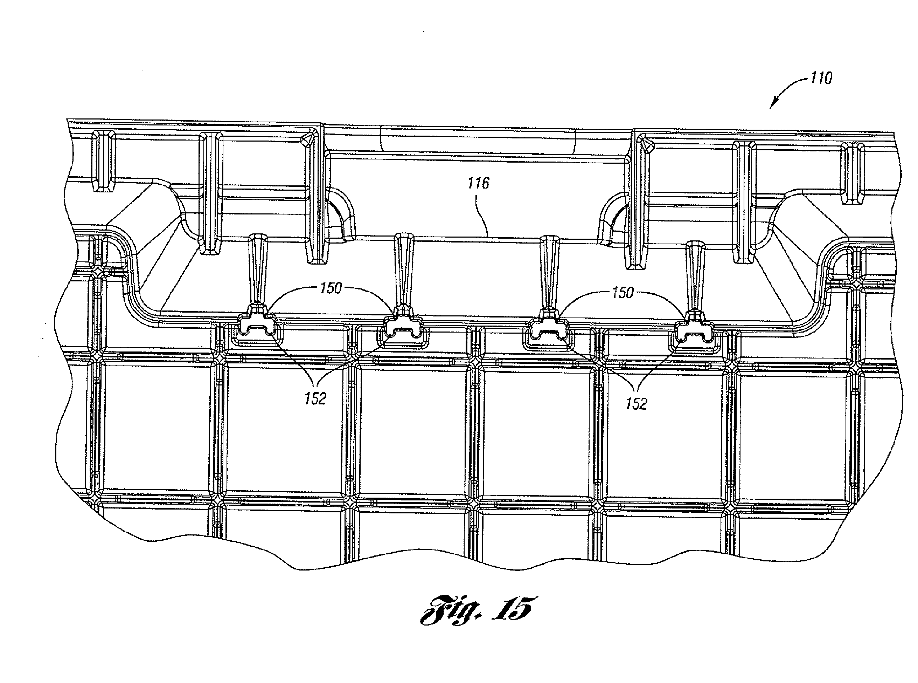

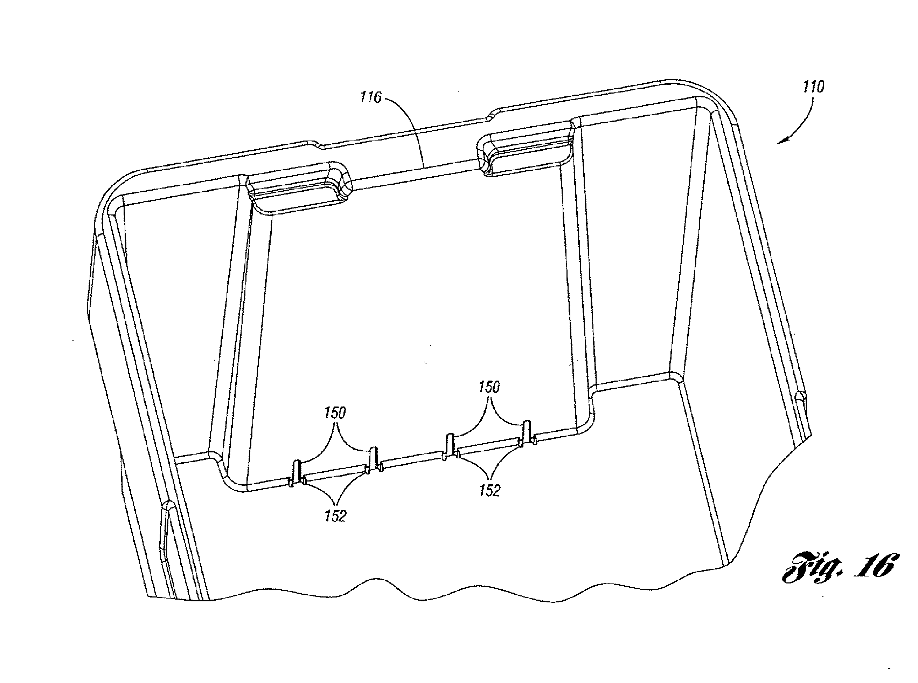

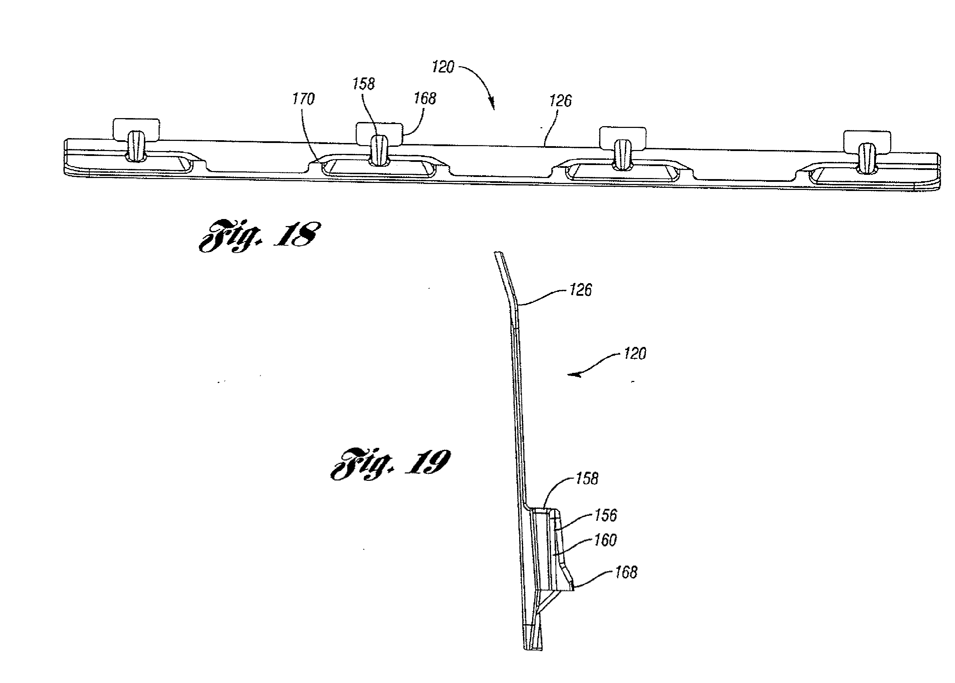

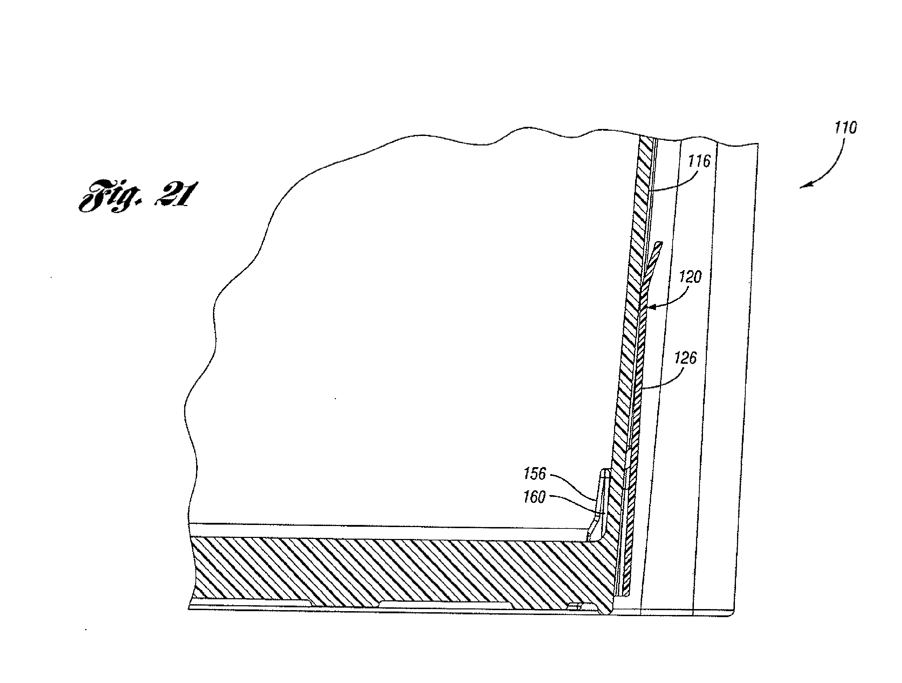

A container 110 and a card holder 120 according to a second embodiment of the present invention is shown in Figures 12-22. Referring to Figure 12, the container 110 includes side walls 114 and end walls 116, 117. The container 110 includes offset portions 118 such that the container 110 includes the 180 degree stack/nest feature as does the previous embodiment. The card holder 120 is clear plastic so that the indicia 52 on the card 50 is readable through the card holder 120.

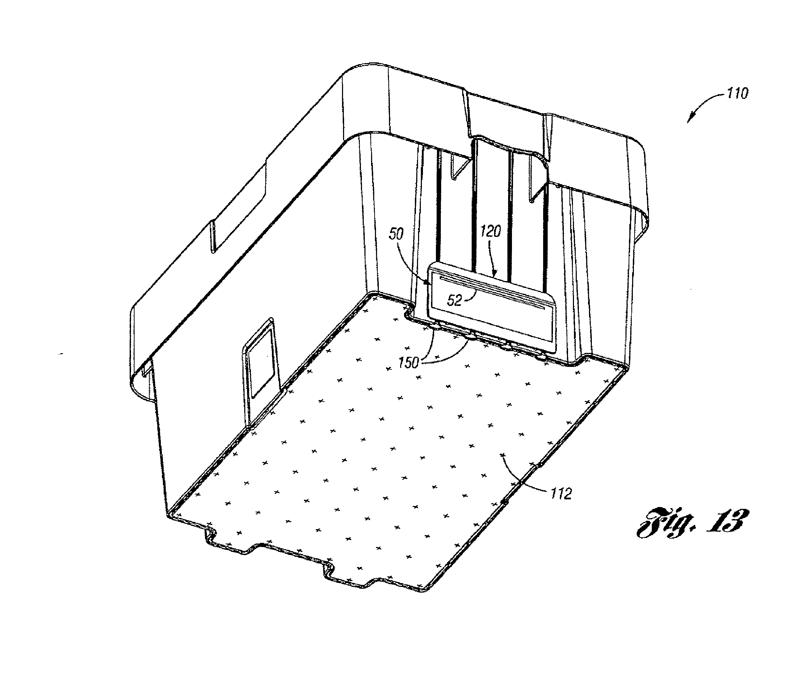

As shown in Figure 13, the end wall 116 includes a plurality of vertical slots 150 to which the card holder 120 is attached. The container 110 includes a base cover 112 providing a smooth lowermost surface.

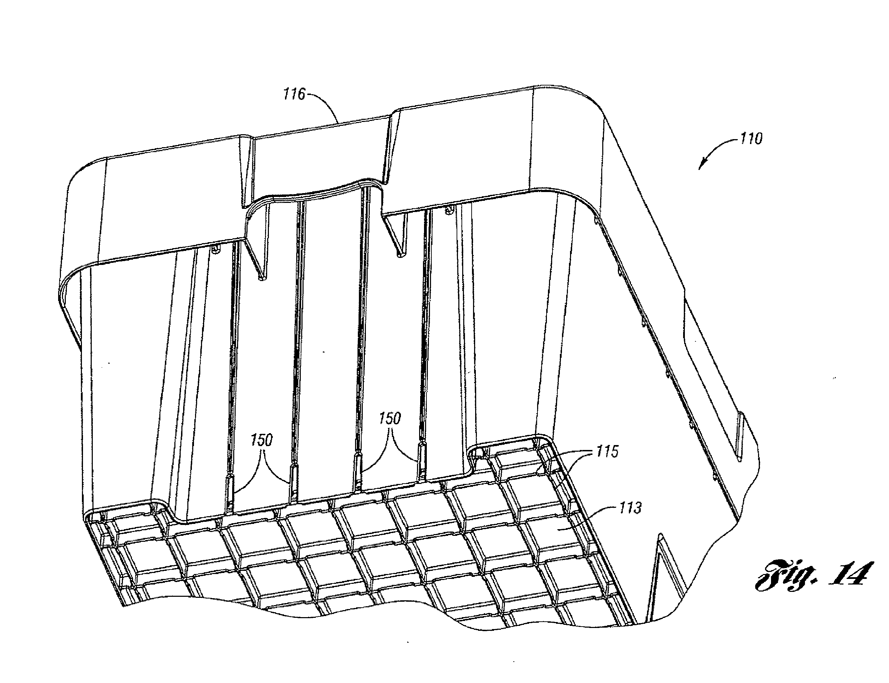

Figures 14-16 show the container 110 without the card holder 120 and without the base cover 112. The container 110 includes base wall 113 having a plurality of cross ribs 115 to which the base cover 112 (Figure 13) can be secured. The vertical slots 150 in the end wall 116 open downward and are contiguous with openings 152 through the base wall 113.

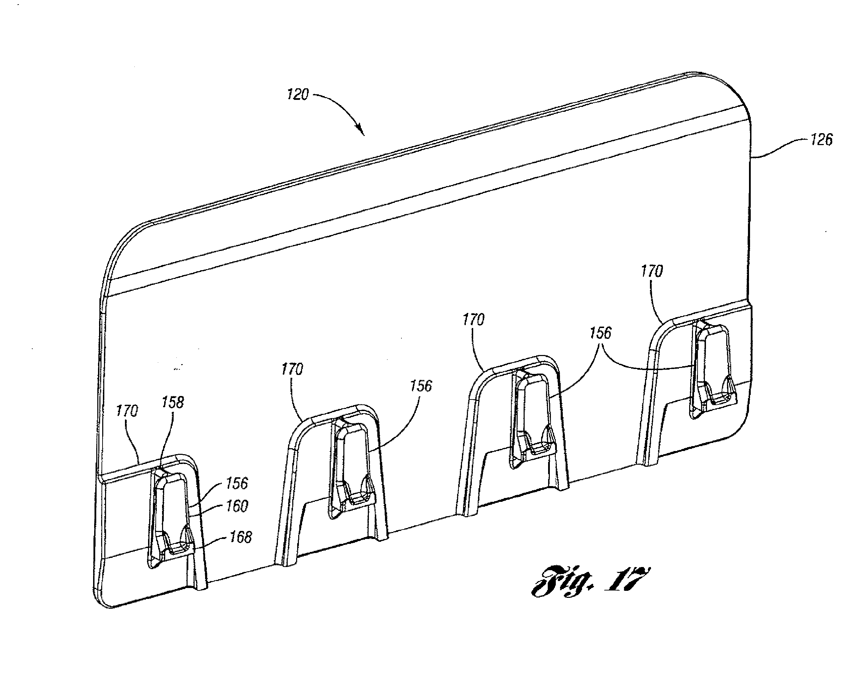

Figures 17-19 show the card holder 120. The card holder 120 is molded of a clear plastic and includes a flap 126 integrally molded with connectors 156. Each connector 156 includes a rib 158 connecting a flange 156 to the flap 126. Each flange 156 includes an enlarged base 168. The flap 126 includes a portion of increased thickness 170 around each connector 156 to increase strength and to make the flap 126 fit tightly against the tub end wall surface.

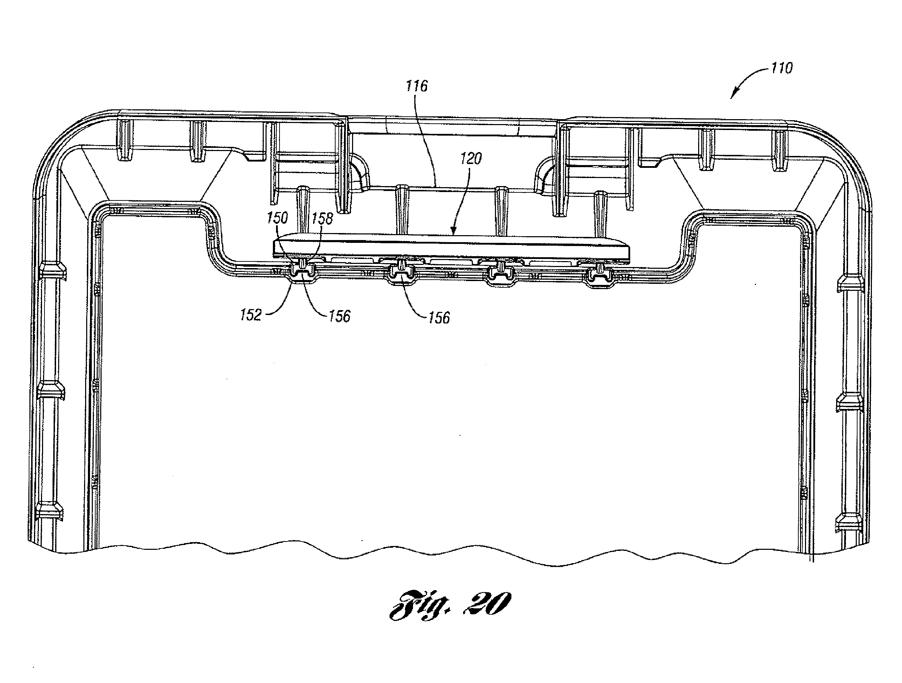

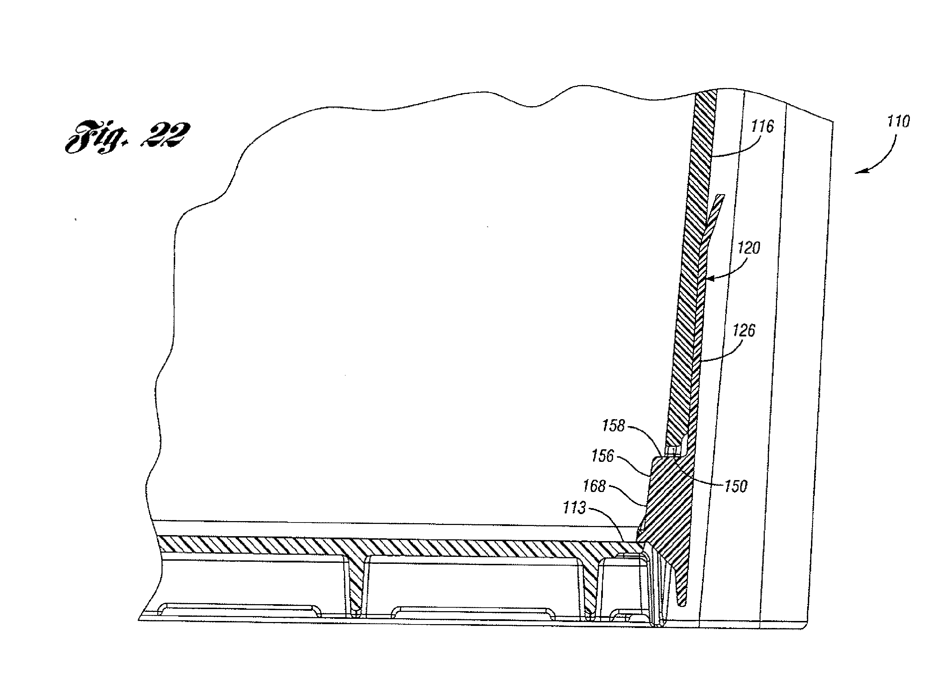

Referring to Figures 20-22, the card holder 120 is connected to the container 110 by sliding the connectors 156 into the openings 152. The ribs 158 slide into the vertical slots 150 until the enlarged base 168 of each connector 156 snaps past the base wall 113 (Figure 22).

In use, the card holder 120 is pulled outward away from the end wall 116 so that a card 50 (Figure 12) can be inserted.

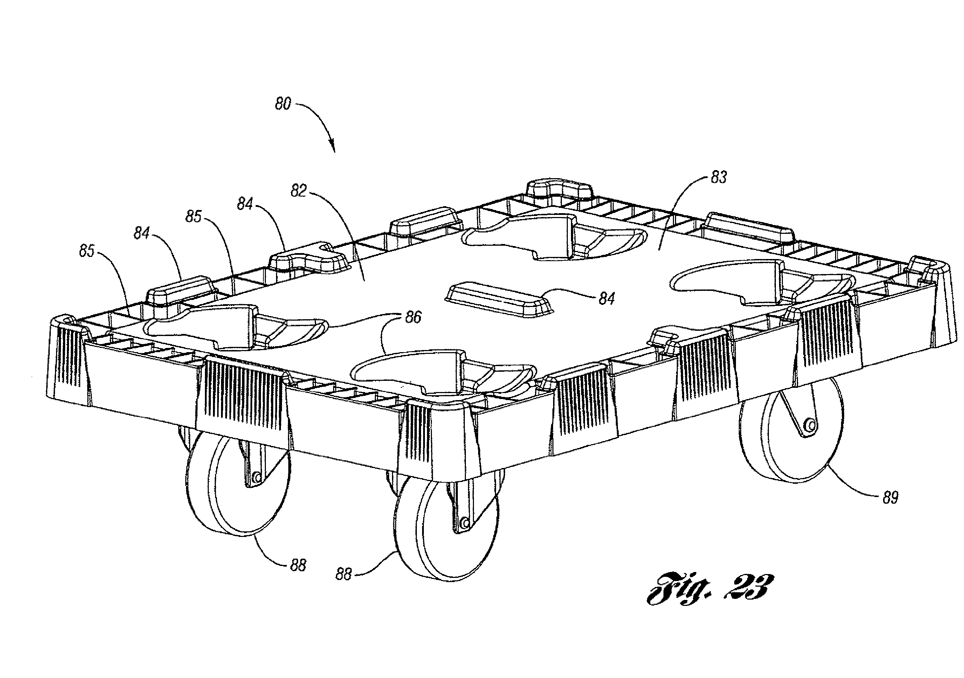

Figure 23 is a perspective view of a dolly 80 that can be used to carry a plurality of the containers 10, 110 of Figures 1-22. The dolly 80 includes a deck 82. having a generally continuous center upper wall 83 and plurality of protruding locators 84 located around the periphery of the deck 82 and in the center of the deck 82. The locators 84 around the periphery are spaced apart by open, ribbed areas 85. The upper surface of the deck 82 further includes a plurality of recesses 86 each aligned with casters 88, 89 on the lower side of the deck 82, such that the casters 88, 89 of a similar dolly stacked thereon would be received in the recesses 86 as will be explained below. The casters 88 each freely rotate about an axis perpendicular to the deck 82. The casters 89 are fixed in a fixed orientation relative to the axis perpendicular to the deck 82. The dolly 80 could alternatively have four rotatable casters 88. As shown in Figure 20, the recesses 86 each include a pair of curved or spherical segments 90 separated by tapered dividers 92.

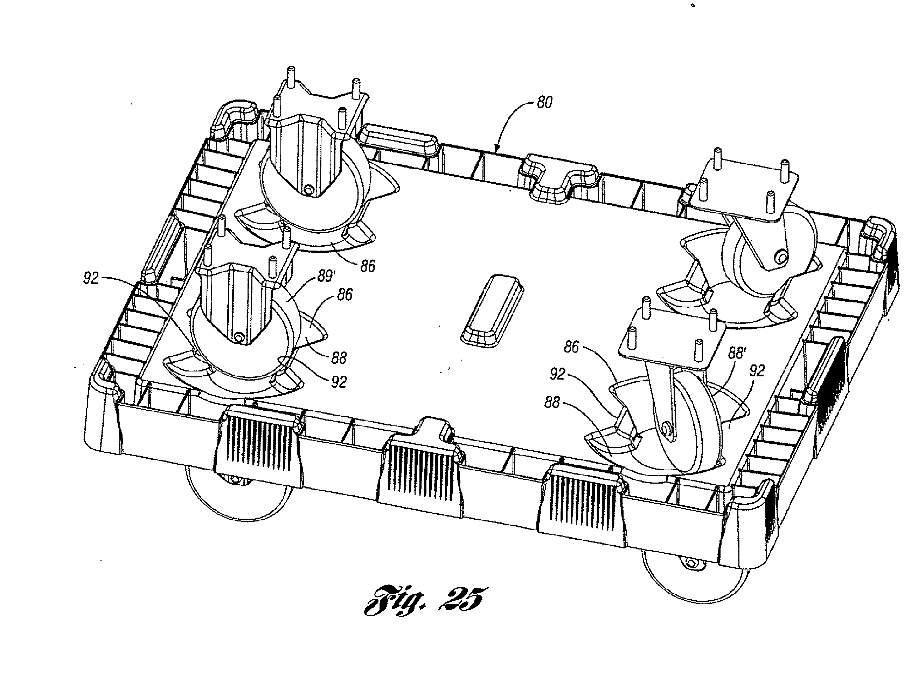

As shown in Figure 25, when a similar dolly (only the casters 88', 89' are shown) is stacked on the dolly 80, the rotational positions of the rotatable casters 88 will be re-aligned by the tapered dividers 92 into the recesses 86. The fixed casters 89' on the dolly will be received in the recesses 86 between the tapered divides 92. Thus the dollies can be stacked without regard for orientation of the casters 88, 89, which direction the dolly is oriented and whether the dolly has four rotatable casters 88' or two.

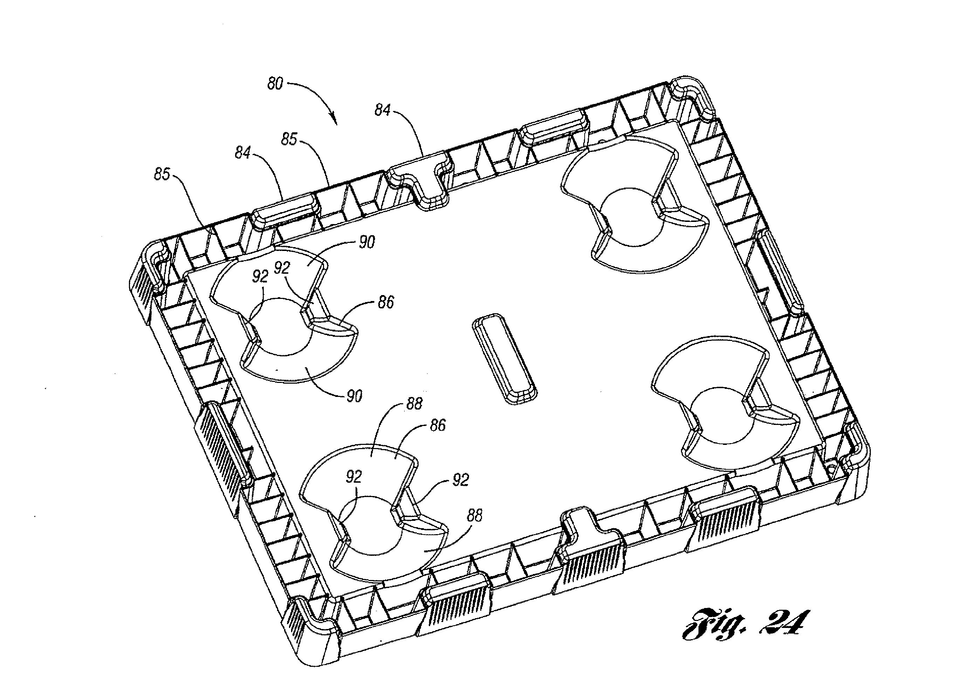

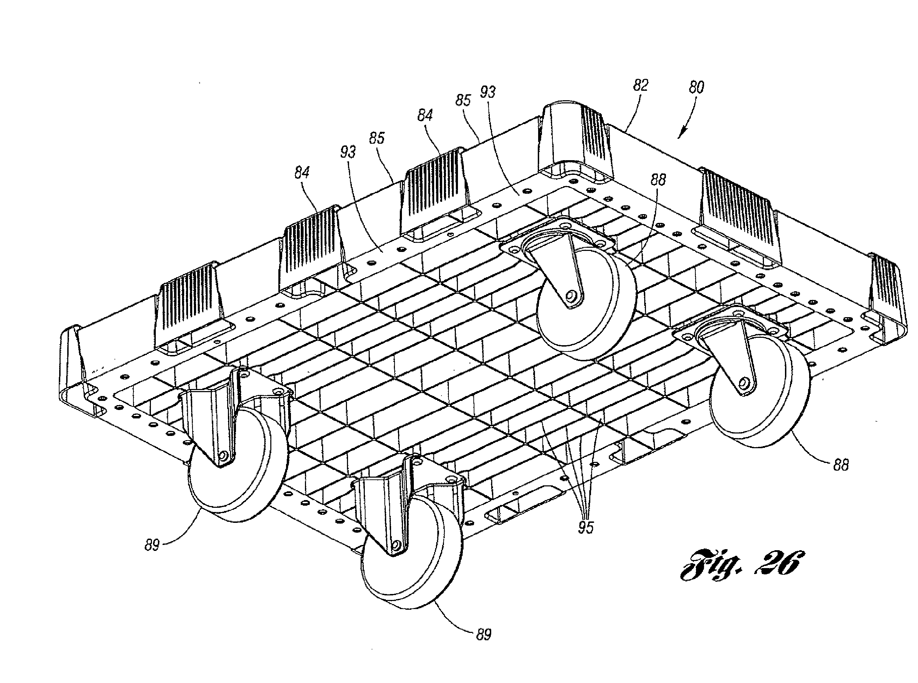

Figure 26 is a bottom perspective view of the dolly 80. As shown, the bottom of each of the locators 84 is open. However, the open, ribbed areas 85 (Figure 24) are open so that most of the peripheral portions 93 of the bottom of the deck 82 can be substantially closed (other than small drainage holes). The closed peripheral portions 93 of the bottom of the deck 82 facilitates handling by automated handling equipment. The closed peripheral portions 93 correspond to the open, ribbed areas 85 (Figure 23) on the upper side of the deck 82. The closed locators 84 on the top of the deck 82 (Figure 23) correspond the open areas. The remainder of the underside of the deck 82 is defined by ribs 95 extending downwardly from the upper wall 83 (Figure 23) of the deck 82.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A dolly (80) comprising:
a deck (82) having a plurality of recesses (86) formed in an upper surface thereof, the recesses (86) each including two curved portions (90) partially separated by tapered dividers (92); and
a plurality of casters (88, 89) extending downward from the deck (82), each aligned with one of the plurality of recesses (86).

2. The dolly of claim 1 wherein the casters (88) are rotatable about an axis perpendicular to the deck (82).

3. The dolly of claim 1 wherein the plurality of casters (88, 89) include two casters (88) rotatable about an axis perpendicular to the deck (82) and two fixed casters (89).

4. The dolly of claim 1 further including a plurality of locators (84) protruding upwardly from a periphery of the deck (82).

5. The dolly of claim 1 further including a substantially closed peripheral portion (93) about the periphery of the underside of the deck (82).

6. The dolly of claim 5 wherein the deck (82) includes an upper panel down from which a plurality of ribs extend, the peripheral portion corresponding to an upper periphery extending around the periphery of the upper panel, the upper periphery being primarily open, with ribs extending therethrough.

7. The dolly of claim 6 further including a plurality of locators (84) protruding upward from the upper periphery of the deck (82), the locators (84) opening downwardly.
